# EUROPÄISCHE PATENTANMELDUNG

(11) **EP 1 552 897 A2**
(43) Veröffentlichungstag der Anmeldung: **13.07.2005**
(21) Anmeldenummer: 04029435.7
(22) Anmeldetag: 13.12.2004
(51) Int. Cl.: B23B 31/107, B23B 29/04

(54) **Werkzeugaufnahmevorrichtung**

(30) Priorität: 07.01.2004 DE 102004001148
(71) Anmelder: Schweizer, Dorothea, 74357 Bönnigheim (DE)
(72) Erfinder: Michael Schweizer, 28215 Bremen (DE)
(74) Vertreter: Fleck, Hermann-Josef, Dr.-Ing.

(57) **Zusammenfassung**

Die Erfindung bezieht sich auf eine Werkzeugaufnahmevorrichtung mit einem Aufnahmekörper (1; 20), in dem mindestens ein Werkzeug (3; 25, 26) einsetzbar und mittels einer Verspannvorrichtung festlegbar ist, die verstellbare Verspannmittel (12, 12a, 8, 13) aufweist. Eine vorteilhafte Bedienung bei stabiler und genauer Verspannung wird dadurch erreicht, dass der Aufnahmekörper als Grundhalter (20) mit zwei Aufnahmen (24) zum wahlweisen Einsetzen des Werkzeuges (3; 25, 26) in zwei verschiedenen Richtungen ausgebildet ist, in denen das mindestens eine Werkzeug (3; 25, 26) mit denselben Verspannmitteln (12, 12a, 8, 13) festlegbar ist (Fig. 3).

## Beschreibung

Die Erfindung bezieht sich auf eine Werkzeugaufnahmevorrichtung mit einem Aufnahmekörper, in dem mindestens ein Werkzeug einsetzbar und mittels einer Verspannvorrichtung festlegbar ist, die verstellbare Verspannmittel aufweist.

Eine derartige Werkzeugaufnahmevorrichtung ist in der DE 203 11 391 U1 angegeben. Hierbei werden zwei Bauteile in Form eines Aufnahmekörpers und ein Werkzeug, insbesondere ein Schneidenträgerwerkzeug, mittels einer Verspannvorrichtung stabil miteinander lösbar verspannt, wobei ein Schaft des Werkzeugs in eine Aufnahme bzw. Bohrung des Aufnahmekörpers eingeführt und darin mittels Verspannmittel festgelegt wird. Die Verspannvorrichtung weist eine quer durch die Aufnahme und den Schaft verlaufende Durchführung mit einer Kegelbohrung auf, die mit einem Außenkegel eines durchgeführten Spannbolzens derart zusammenwirkt, dass der Schaft des Werkzeuges in den Aufnahmekörper eingezogen wird, bis quer zur Einführrichtung angeordnete Stützflächen des Aufnahmekörpers und des Werkzeuges aneinander in Widerlage kommen. Durch das Einziehen des Spannbolzens können unerwünschte Querkräfte an dem Zapfen auftreten und auch ein Festsetzen des Spannbolzens in der Durchführung des Werkzeugs kann sich ergeben, wodurch die Bedienung erschwert sein kann, wenn die Abstimmung der Spannvorrichtung nicht genau vorgenommen ist. Ferner ist es erwünscht, die Werkzeugaufnahmevorrichtung möglichst vielseitig verwenden zu können.

Der Erfindung liegt die Aufgabe zugrunde, eine Werkzeugaufnahmevorrichtung der eingangs genannten Art bereitzustellen, mit der bei möglichst vielseitiger Verwendbarkeit eine einfache Bedienung erreicht wird.

Diese Aufgabe wird mit den Merkmalen des Patentanspruches 1 gelöst. Hierbei ist vorgesehen, dass der Aufnahmekörper als Grundhalter mit zwei Aufnahmen zum wahlweisen Einsetzen des Werkzeuges in zwei verschiedenen, beispielsweise in axialer oder radialer Richtung ausgebildet ist, in denen das mindestens eine Werkzeug mit denselben Verspannmitteln festlegbar ist.

Mit diesen Maßnahmen kann das Werkzeug, wie z.B. ein Schneidenträgerwerkzeug, in verschiedenen Stellungen in den Aufnahmekörper eingesetzt und darin einfach festgelegt werden. Bei dem Werkzeug kann es sich um ein nicht rotierendes, statisches Werkzeug oder ein rotierendes Werkzeug handeln. Da die Festlegung mit denselben Verspannmitteln in den beiden verschiedenen Stellungen des Werkzeuges erfolgt, ist auch der Aufbau einfach.

Eine für die Bedienung und Verspannung vorteilhafte Ausgestaltung besteht dabei darin, dass das Werkzeug zum Festlegen mit einem Zapfen versehen ist, der in eine von zwei daran angepasste Bohrungen des Grundhalters einsetzbar ist und mit einem Endabschnitt in eine zugeordnete Ausnehmung eines quer zu den beiden Bohrungen eingesetzten Spannbolzens einführbar und darin mittels Spannelemente festspannbar ist.

Querkräfte auf den Zapfen des Werkstückes und auf die Wandung der Bohrung in dem Aufnahmekörper beim Festspannen werden dadurch vermieden, dass der Spannbolzen pendelnd gelagert ist und ein in der Ausnehmung angebrachtes Spannelement mit einer in Einführrichtung des Zapfens mit diesem zusammenwirkenden Spannschräge aufweist und mit einem dem Spannelement in der Ausnehmung gegenüberliegenden verstellbaren Spannelement versehen ist, welches eine in Einführrichtung des Zapfens ebenfalls mit diesem zusammenwirkende weitere Spannschräge aufweist. Dadurch ergibt sich auch eine stets exakte Positionierung des Werkstückes und damit des von ihm getragenen Bearbeitungselements, wie z.B. einer Schneidplatte. Auch ergeben sich Vorteile beim Lösen des Werkzeugs und hinsichtlich der Verschleißfestigkeit.

Zu einer stabilen, einfachen Verspannung tragen die Maßnahmen bei, dass in dem Zapfen zum Zusammenwirken mit den Spannschrägen angepasste Gegenspannschrägen ausgebildet sind.

Die Verspannvorgänge und das Lösen werden dabei dadurch begünstigt, dass die Spannschrägen an konisch geformten Kegeln des feststehenden und des verstellbaren Spannelementes und die Gegenspannschrägen an konischen Vertiefungen des Zapfens angeordnet sind.

Zu einer einfachen Bedienung und einem einfachen Aufbau tragen des Weiteren die Maßnahmen bei, dass der Spannbolzen nur eine Ausnehmung für den Endabschnitt des Zapfens aufweist und dass die Ausnehmung durch Drehen des Spannbolzens um seine Längsachse wechselweise einer der beiden Bohrungen zuordenbar ist. Um z.B. das Werkzeug in eine axiale Verstellrichtung oder eine um 90° dazu gerichtete radiale Verstellrichtung zu bringen, braucht der Spannbolzen zur Zuordnung zu den betreffenden Aufnahmebohrungen des Aufnahmekörpers einfach nur um 90° um seine Längsachse gedreht zu werden.

Eine stabile, einfache Verspannung wird weiterhin dadurch begünstigt, dass der Aufnahmekörper und das Werkzeug auf ihren einander zugekehrten Außenseiten beim Verspannen gegeneinander in Widerlage bringbare, quer zur Einführrichtung orientierte Stützflächen aufweisen.

Verschiedene vorteilhafte Ausgestaltungsmöglichkeiten bestehen dabei darin, dass die beiderseitigen Stützflächen als flache Ebenen ausgebildet sind oder aneinander angepasste Vertiefungen und Vorsprünge aufweisen. Sind beiderseits Vertiefungen und daran angepasste Vorsprünge vorhanden, ergibt sich eine eindeutige Ausrichtbarkeit des Werkzeuges gegenüber dem Aufnahmekörper. Die Vertiefungen und Vorsprünge können auch zur Stabilisierung des Werkzeugs beitragen, indem sie neben der Verspannvorrichtung zur Drehmomentaufnahme beitragen.

Eine eindeutige Ausrichtung des Werkzeuges und damit auch des Bearbeitungselementes wird auch dadurch erreicht, dass in einer der Stützflächen ein Positionierbolzen und in der anderen Stützfläche mindestens eine an diesen angepasste Positionierbolzenaufnahme angeordnet ist. Auch hierbei trägt der Positionierbolzen zur Drehmomentaufnahme bei.

Weitere vorteilhafte Ausgestaltungsmöglichkeiten bestehen darin, dass der Aufnahmekörper mit einem Wechselschaft versehen ist oder einen in einem Werkzeugrevolver aufgenommenen Halter aufweist.

Die Erfindung wird nachfolgend anhand von Ausführungsbeispielen unter Bezugnahme auf die Zeichnungen näher erläutert. Es zeigen:
- Fig. 1: eine Werkzeugaufnahmevorrichtung mit einem Aufnahmekörper und einem darin eingesetzten Werkzeug in teilweise geschnittener Seitenansicht und im Querschnitt entlang einer Schnittebene A-A, in einem nicht festgespannten Zustand,
- Fig. 2: die Werkzeugaufnahmevorrichtung nach Fig. 1 in einem festgespannten Zustand und
- Fig. 3: eine weitere Werkzeugaufnahmevorrichtung mit einem Aufnahmekörper und darin in zwei verschiedenen Stellungen einsetzbaren und mit einer Verspannvorrichtung festlegbaren Werkzeugen.

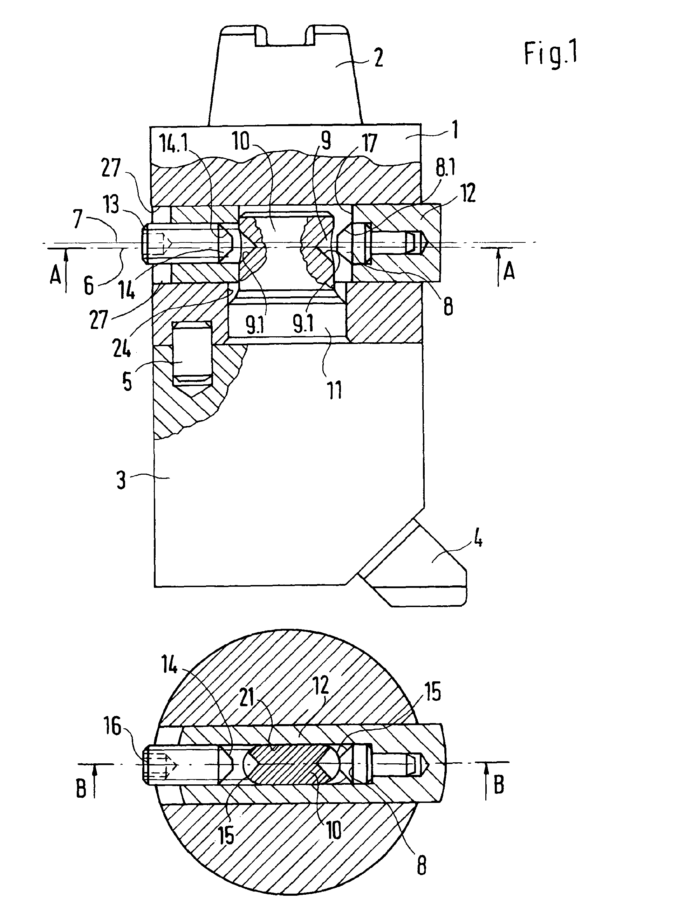

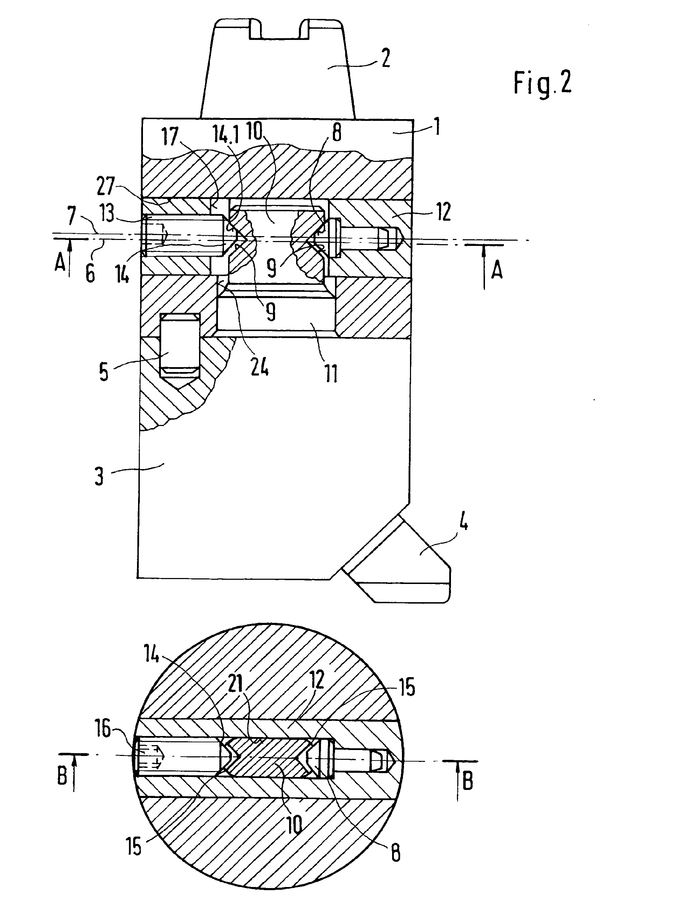

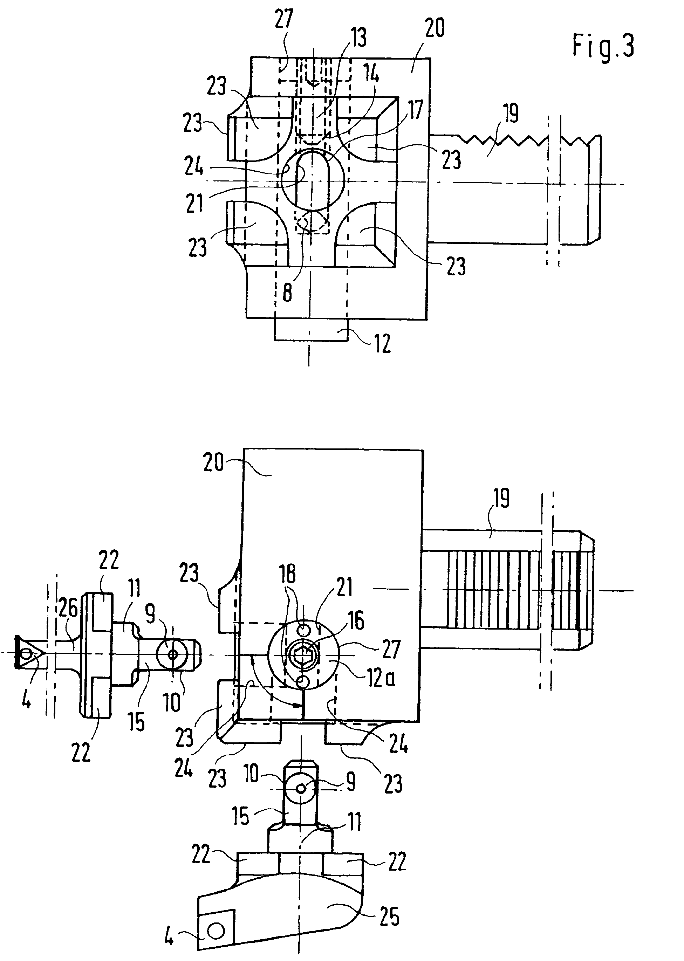

Die Fig. 1 bis 3 zeigen jeweils eine Werkzeugaufnahmevorrichtung mit einem mittels eines Schaftes 2 an einer (nicht gezeigten) Werkzeugmaschine anzubringenden oder angebrachten Aufnahmekörper 1 und daran mittels einer Verspannvorrichtung anbringbaren Werkzeug 3 bzw. 25, 26, das beispielsweise als Schneidenträgerwerkzeug mit einer gegebenenfalls wechselbaren Schneide 4 ausgebildet ist. Fig. 1 zeigt dabei ein erstes Ausführungsbeispiel der Werkzeugaufnahmevorrichtung, bei der das Werkzeug 3 mittels eines Zapfens 11 in eine daran angepasste Bohrung 24 des Aufnahmekörpers 1 eingesetzt, aber noch nicht verspannt ist, in einer im Bereich der Verspannvorrichtung teilweise aufgeschnittenen Seitenansicht und in einem Querschnitt längs einer Schnittebene A-A ebenfalls im Bereich der Verspannvorrichtung. Fig. 2 zeigt die entsprechende Werkzeugaufnahmevorrichtung wie Fig. 1, jedoch im festge-spannten Zustand des Werkzeuges 3. Bei der Ausbildung der Werkzeugaufnahmevorrichtung nach Fig. 3 ist ein Werkzeugaufnahmekörper 1 mit zwei um 90° gegeneinander versetzten Aufnahmebohrungen in zwei verschiedenen seitlichen Ansichten dargestellt, wobei die gezeigten, einzusetzenden Werkzeuge 25, 26 mit denselben Verspannmitteln festgelegt werden.

Nach Fig. 1 besteht die Werkzeugaufnahmevorrichtung aus dem Aufnahmekörper 1 mit dem Schaft 2 zur Verbindung mit der Werkzeugmaschine. Quer zu der Aufnahmebohrung 24 des Aufnahmekörpers 1 in radialer Richtung durchgehend ist eine Querbohrung 27 eingebracht, in welcher ein als Pendelspannbolzen ausgebildeter Spannbolzen 12 pendelnd bzw. schwimmend gelagert ist. Der Pendelspannbolzen 12 besitzt eine radial durchgehende oder sacklochförmige nutartige Ausnehmung 21, in die ein Endabschnitt 10 des Zapfens 11 einsetzbar ist. Die Ausnehmung 21 ist, wie aus der Querschnittsdarstellung ersichtlich, in Draufsicht länglich mit zueinander parallelen Längsseiten und kreisförmig gerundeten Schmalseiten ausgebildet, und der lappenartig geformte Endabschnitt 10 ist in seinem Querschnitt an die Ausnehmung 21 angepasst. In axialer Richtung ist in die Ausnehmung 21 des Pendelspannbolzens 12 auf der einen Seite ein feststehendes Spannelement 8 mit kegelförmigem Ende eingebracht, das eine Spannschräge 8.1 zum Einziehen des Zapfens 11 aufweist. Dem feststehenden Spannelement 8 ist diametral gegenüberliegend ein verstellbares Spannelement in Form eines beweglichen Kegels 14 mit einer weiteren Spannschräge 14.1 zugeordnet, das als in den Pendelspannbolzen 12 eindrehbarer oder aus diesem herausdrehbarer Gewindestift 13 mit einem Innensechskant zum Einsetzen einer Handhabe ausgebildet ist. Denkbar wäre es auch, das feststehende Spannelement 8 und das verstellbare Spannelement 13 in axialer Richtung des Zapfens 11 gegeneinander zu versetzen.

Zum Festspannen des Werkzeugs 3 mittels des feststehenden Spannelementes 8 und des verstellbaren Spannelementes 13 sind auf den entsprechenden Seiten des Endabschnittes 10 kegelförmige Vertiefungen bzw. Einsenkungen in Form von Hohlspitzen 9 ausgebildet, die mit den Spannschrägen 8.1, 14.1 zusammenwirkende Gegenspannschrägen 9.1 aufweisen, so dass beim Eindrehen des verstellbaren Spannelementes 13 das Werkzeug 3 mit seinem Zapfen 11 in die Bohrung 24 des Aufnahmekörpers 1 eingezogen wird, bis das Werkzeug 3 mit einer in Normalenrichtung zur Einführrichtung liegenden Abstützfläche an einer zugekehrten Abstützfläche des Aufnahmekörpers 1 in Widerlage kommt und eine feste Verspannung erreicht wird. Dabei brauchen die Spannschrägen 8.1, 14.1 einerseits und die Gegenspannschrägen 9.1 andererseits in der Neigung ihrer Schrägen nicht übereinzustimmen. Um die Verspannung zu erreichen, sind das feststehende Spannelement 8 und das verstellbare Spannelement 13 in ihrer Achsrichtung gegenüber den Gegenschrägen 9.1 bzw. kegelförmigen Vertiefungen 9 so in Einführrichtung versetzt, dass sich die gewünschte Verspannung und Anlage der beiden Abstützflächen aneinander ergibt, wie durch den Versatz der eingezeichneten Linien 6, 7 dargestellt. Durch die Verspannung mit dem Pendelspannbolzen 21 in der gezeigten Art ergibt sich eine Zentrierung des Werkzeugs 3, wobei Querkräfte auf den Zapfen 11 in der Bohrung 24 vermieden werden und ein sicherer Einzug des Werkzeuges 3 und eine feste Verspannung erreicht werden. Auch lässt sich das Werkzeug 3 leicht aus dem Aufnahmekörper 1 wieder lösen.

Um eine eindeutige Positionierung des Werkzeugs 3 gegenüber dem Aufnahmekörper 1 zu erhalten, ist in einer der beiden Abstützflächen ein Positionierbolzen 5 eingesetzt und in der anderen Abstützfläche mindestens eine entsprechende Aussparung vorgesehen. Dadurch kann z.B. die Lage der Schneide 4 abgestimmt werden. Der Positionierbolzen 5 kann dabei zusätzlich zu der Spannvorrichtung zur Aufnahme des bei der Bearbeitung auftretenden Drehmoments beitragen.

Wie Fig. 2 zeigt, erfolgt der Verspannvorgang durch Einschrauben des verstellbaren Spannelementes 14 in Form des Gewindestiftes 13. Bei Kontakt zwischen der betreffenden Spannschräge 14.1 und der zugeordneten Gegenspannschräge 9.1 des Endabschnittes 10 bewegt sich bei weiterem Einschrauben des Gewindestiftes 13 der Pendelspannbolzen 12 in oder entgegen der Einschraubrichtung. Dabei kommt es zum Kontakt zwischen dem feststehenden Spannelement 8 und der betreffenden kegelförmigen Vertiefung 9. Durch Einleiten eines entsprechenden Drehmoments an dem Gewindestift 13 wird durch Umlenkung der Spannkraft an der Schnittstelle bzw. den Abstützflächen zwischen dem Aufnahmekörper 1 und dem Werkzeug 3 eine axiale Verspannkraft erzeugt. Da keine Kraftverluste durch Radialkräfte entstehen, kommt die volle eingeleitete Kraft unter Abzug relativ geringer Reibkräfte an der Schnittstelle zur Wirkung. Außerdem übernehmen sowohl die Spannelement 8, 13 im Zusammenwirken mit den Vertiefungen bzw. Hohlspitzen 9 als auch der lappenförmige Endabschnitt 10 das durch die Zerspanungskräfte entstehende Drehmoment, wobei auch der Positionierbolzen 5 zur Drehmomentaufnahme beiträgt.

Bei dem Ausführungsbeispiel nach Fig. 3 handelt es sich abweichend von dem Ausführungsbeispiel nach den Fig. 1 und 2 beispielhaft um ein statisches Werkzeug 25, 26, beispielsweise ebenfalls um ein Schneidenträgerwerkzeug.

An dem Aufnahmekörper 1 in Form des Grundhalters 20 ist ein Schaft z.B. in Form eines normierten Spannzapfens 19 angefügt. In dem Aufnahmekörper 20 in Form des Grundhalters ist in Richtung der Achse des Spannzapfens 19 parallel zu diesem versetzt eine Bohrung 24 als Aufnahme für den Zapfen 11 mit seinem Endabschnitt 15 (z.B. entsprechend dem Endabschnitt 10) angeordnet. Eine weitere Bohrung 24 ist um 90° zu der Achse der ersten Bohrung bzw. des Spannzapfens 19 versetzt angeordnet, wobei die beiden Bohrungen 24 in der gemeinsamen Querbohrung 27 münden, in die entsprechend dem Ausführungsbeispiel nach den Fig. 1 und 2 der Spannbolzen 12 bzw. 12A pendelnd eingesetzt ist.

Mit den um 90° zueinander versetzt einsetzbaren Werkzeugen 25, 26, bei denen es sich um dasselbe Werkzeug handeln kann, sind wahlweise Drehbearbeitungen in zwei Achsrichtungen axial und radial durchführbar. Um eine einfache Verspannung mittels derselben Verspannvorrichtung zu erreichen, ist der Pendelspannbolzen 12a derart ausgebildet, dass er mit Hilfe eines Stiftschlüssels, der in stirnseitige Löcher 18 einsetzbar ist, um 90° verdreht werden kann.

Zum eindeutigen und festen Verspannen sind die den beiden Bohrungen 24 zugeordneten Abstützflächen des Aufnahmekörpers 1 mit Vorsprüngen und Vertiefungen versehen, die beispielsweise als vier Radiussegmente ausgebildet sind. Entsprechende komplementäre Ausnehmungen und Vorsprünge sind an der zugeordneten Abstützfläche des Werkzeuges 25, 26 ausgebildet, so dass ein eindeutiges, drehstabiles Zusammenfügen des Werkzeuges 25, 26 und des Aufnahmekörpers 1 beim Verspannen gewährleistet ist.

## Patentansprüche

1. Werkzeugaufnahmevorrichtung mit einem Aufnahmekörper (1; 20), in dem mindestens ein Werkzeug (3; 25, 26) einsetzbar und mittels einer Verspannvorrichtung festlegbar ist, die verstellbare Verspannmittel (12, 1 2a, 8, 13) aufweist,
**dadurch gekennzeichnet,**
**dass** der Aufnahmekörper als Grundhalter (20) mit zwei Aufnahmen (24) zum wahlweisen Einsetzen des Werkzeuges (3; 25, 26) in zwei verschiedenen Richtungen ausgebildet ist, in denen das mindestens eine Werkzeug (3; 25, 26) mit denselben Verspannmitteln (12, 12a, 8, 13) festlegbar ist.

2. Vorrichtung nach Anspruch 1,
**dadurch gekennzeichnet,**
**dass** das Werkzeug (3; 25, 26) zum Festlegen mit einem Zapfen (11) versehen ist, der in eine von zwei daran angepasste Bohrungen (24) des Grundhalters (20) einsetzbar ist und mit einem Endabschnitt (10) in eine zugeordnete Ausnehmung (21) eines quer zu den beiden Bohrungen (24) eingesetzten Spannbolzens (12, 12a) einführbar und darin mittels Spannelemente (8, 13) festspannbar ist.

3. Vorrichtung nach Anspruch 2,
**dadurch gekennzeichnet,**
**dass** der Spannbolzen (12, 12a) pendelnd gelagert ist und ein in der Ausnehmung (12) angebrachtes Spannelement (8) mit einer in Einführrichtung des Zapfens (11) mit diesem zusammenwirkenden Spannschräge (8.1) aufweist und mit einem dem Spannelement (8) in der Ausnehmung (12) gegenüberliegenden verstellbaren Spannelement (13) versehen ist, welches eine in Einführrichtung des Zapfens (11) ebenfalls mit diesem zusammenwirkende weitere Spannschräge (13.1) aufweist.

4. Vorrichtung nach Anspruch 2 oder 3,
**dadurch gekennzeichnet,**
**dass** in dem Zapfen (11) zum Zusammenwirken mit den Spannschrägen (8.1, 13.1) angepasste Gegenspannschrägen (9.1) ausgebildet sind.

5. Vorrichtung nach Anspruch 4,
**dadurch gekennzeichnet,**
**dass** die Spannschrägen (8.1, 13.1) an konisch geformten Kegeln (14) des feststehenden (8) und des verstellbaren Spannelementes (13) und die Gegenspannschrägen (9.1) an konischen Vertiefungen (9) des Zapfens angeordnet sind.

6. Vorrichtung nach einem der Ansprüche 2 bis 5,
**dadurch gekennzeichnet,**
**dass** der Spannbolzen (12, 12a) nur eine Ausnehmung (21) für den Endabschnitt (10) des Zapfens (11) aufweist und
**dass** die Ausnehmung durch Drehen des Spannbolzens (12, 12a) um seine Längsachse wechselweise einer der beiden Bohrungen (24) zuordenbar ist.

7. Vorrichtung nach einem der vorhergehenden Ansprüche,
**dadurch gekennzeichnet,**
**dass** der Aufnahmekörper (1; 20) und das Werkzeug (3; 25, 26) auf ihren einander zugekehrten Außenseiten beim Verspannen gegeneinander in Widerlage bringbare, quer zur Einführrichtung orientierte Stützflächen (22, 23) aufweisen.

8. Vorrichtung nach Anspruch 7,
**dadurch gekennzeichnet,**
**dass** die beiderseitigen Stützflächen (22, 23) als flache Ebenen ausgebildet sind oder aneinander angepasste Vertiefungen und Vorsprünge aufweisen.

9. Vorrichtung nach Anspruch 7 oder 8,
**dadurch gekennzeichnet,**
**dass** in einer der Stützflächen (22 oder 23) ein Positionierbolzen (5) und in der anderen Stützfläche (23 oder 22) mindestens eine an diesen angepasste Positionierbolzenaufnahme angeordnet ist.

10. Vorrichtung nach einem der vorhergehenden Ansprüche,
**dadurch gekennzeichnet,**
**dass** der Aufnahmekörper (1; 20) mit einem Wechselschaft (19) versehen ist oder einen in einem Werkzeugrevolver aufgenommenen Halter aufweist.
